# EUROPEAN PATENT APPLICATION

(11) **EP 2 277 691 A1**
(43) Date of publication of application: **26.01.2011**
(21) Application number: 10167090.9
(22) Date of filing: 23.06.2010
(51) Int. Cl.: B32B 5/24, E04B 1/76, E04B 1/78

(54) **Aerogel comprising laminates**

(30) Priority: 25.06.2009 EP 09008326
(71) Applicant: Knauf Insulation Technology GmbH, 9586 Fürnitz (AT)
(72) Inventor: Dambly, Thorsten, 9586 Fürnitz (AT); Weissmüller, Armin, 9586 Fürnitz (AT)
(74) Representative: Farmer, Guy Dominic

(57) **Abstract**

The present invention relates to laminates having at least a first and a second layer, wherein the first layer comprises an aerogel, and the second layer comprises a further functional material such as an insulating or stabilizing material, said laminates having improved thermal and acoustic insulation properties.

## Description

The present invention relates to laminates having at least a first and a second layer, wherein the first layer comprises an aerogel, and the second layer comprises a further functional material such as an insulating or stabilizing material, said laminates having improved thermal and acoustic insulation properties.

A wide variety of materials for thermal and acoustic insulation are known. Polymeric fibers, resins and foams, mineral fiber based materials such as mineral wool, as well as slag wool, wood wool, and vacuum based materials are among those most frequently used in such thermal and/or acoustic insulation applications.

The insulation efficiency, usually expressed by the material's thermal conductivity λ, typically improves with an increasing thickness of such materials. For example, a typical mineral wool sheet is required to have a thickness of 18 to 20 cm in order to achieve a desired thermal insulation of 0.020 W/m·K, while thinner sheets provide a less efficient thermal insulation.

However, in certain applications where the maximum thickness of insulation material is limited, e.g. in window and door reveals or in floor coverings, the desired insulation value might not be achieved by using regular materials such as those mentioned above.

For such applications where there is only limited space for an insulation material aerogel containing polyester fleeces have been used. Such polyester fleeces are capable of achieving low thermal insulation conductivities with relatively small thicknesses of a few cm. However, since such products are difficult to handle and their manufacture is costly, aerogel-based polyester fleeces have only be used in a few applications such as roof insulation and the manufacture of weatherproof clothes.

Accordingly, a need exists for new insulation materials which are easy to handle and can effectively be used in locations where the space for installation is limited and which are easy to produce and thus inexpensive.

Therefore, the technical problem underlying the present invention is to provide an insulation material with improved insulation properties which is easy to handle and requires a relatively thin profile when compared to regular resin and fiber based insulation materials.

This technical problem is solved by providing the embodiments characterized in the claims.

In particular, there is provided a laminate having at least a first and a second layer, wherein the first layer comprises an aerogel, and the second layer comprises a cover material.

The laminate of the present invention may, of course, comprise further functional layers, which are not limited in any respect. Examples of such additional layers, without any limitation thereto, are impact sound insulation layers, acoustic insulation layers, and the like.

Additionally, the order of the layers comprised in said laminate is not restricted as long as a layer structure is provided, which comprises at least a first and a second layer as defined herein. For example, the first and second layers may be in direct contact, or one or more additional functional layers may be arranged below, on top or between the first and the second layer, or in any combination thereof.

The term "aerogel" used herein is not specifically restricted and means any porous material which has a porosity of more than 75%. Preferably, the aerogel usable according to the present invention has a porosity of more than 80%, and more preferably of 85% or more.

Examples of such aerogels are silica aerogels, carbon aerogels, alumina aerogels and aerogels based on agar or chalcogens, a variety of which are commercially available. According to the present invention, preferred aerogels have a bulk density of 50 to 120 kg/m³ and/or a surface area of more than 500 m²/g.

Moreover, the form of the aerogel as comprised in the first layer of the above-defined laminate is not specifically restricted and may, for example, be a sheet-like form or a particle form. In one example, the aerogel may be present in form of particles which are randomly distributed within the first layer.

One embodiment of the present invention relates to a laminate as defined above, wherein the aerogel has a particle size of 10 nm to 10 mm.

However, according to the present invention, the particle size of the aerogel is not limited and may for example be in the range of 50 nm to 8 mm, preferably in the range of 100 nm to 7 mm, or in a range of 1 µm to 5 mm. Further examples include aerogels having a particle size the range of 0.1 to 4.8 mm, in the range of 0.3 to 4.5 mm or in the range of 0.5 to 4.0 mm.

The aerogel usable in the present invention should have a low thermal conductivity, such as a thermal conductivity which is less than 0.030 W/m.K. Preferably, the aerogel usable in the above-defined laminate has a thermal conductivity of less than 0.025 W/m·K, and more preferably of less than 0.020 W/m·K, as measured at 25°C.

According to a specific embodiment of the laminate as defined above, the aerogel has a thermal conductivity at 25°C of 0.020 W/m·K or less.

According to the present invention, the first layer may fully consist of the above-defined aerogel or may comprise such an aerogel in combination with other components. For example, the aerogel may itself be comprised in a porous material, such as a foam or a fiber matrix.

A specific embodiment of the present invention relates to a laminate as defined above, wherein the first layer comprises an aerogel containing fabric.

The term "fabric" as used herein is not limited to a specific fabric but includes any flexible material which consist of a network of natural or artificial fibers. Furthermore, the form of such a fabric is not restricted and includes particles, pads, strips and sheets. Examples of such fibers are cotton, linen, hemp, nylon, polyester, mineral wool such as glass wool or rock wool, wood wool, and the like.

The expression "aerogel containing fabric" as used herein is not specifically restricted and includes any combination of aerogels and fabrics which has a low thermal conductivity and can be used in the laminate according to the present invention.

Another embodiment of the present invention relates to the above-defined laminate, wherein the aerogel containing fabric has a thermal conductivity of 0.020 W/m·K or less.

For example, the aerogel containing fabric of the present invention has a thermal conductivity of 0.018 W/m·K or less, preferably of 0.015 W/m·K or less, and more preferably of 0.013 W/m·K or less.

According to a specific embodiment of the above-defined laminate, the aerogel containing fabric is an aerogel containing polyester fleece.

One example of an aerogel containing polyester fleece is Spaceloft™, which is commercially available from Aspen Aerogels Incorporated.

The aerogel containing polyester fleece is not restricted in shape and density and may for example be in a form of pads, strips or sheets and may have a bulk density in the range of 5 to 50 kg/m³, preferably in the range of 6 to 30 kg/m³ and more preferably in the range of 7 to 20 kg/m³.

In a further embodiment of the present invention, the first layer of the laminate as defined above has a thickness in the range of 10 to 40 mm.

According to the present invention, the thickness of the first layer may further depend on the type and thickness of the cover layer as the second layer. For example, if the second layer is an insulating layer, the thickness of the first layer of the above-defined laminate may for example be in the range of 10 to 35 mm, or in the range of 10 to 30 mm, without limitation thereto. In case the cover layer may be a stabilizing layer, the thickness of the first layer may for example be in the range of 10 to 50 mm, or in the range of 10 to 40 mm, without limitation thereto.

In a further embodiment of the present invention, the cover material of the above-defined laminate is an insulating material and/or a stabilizing material.

The expression "insulating material" as used herein is not specifically restricted and includes any material which is different from the material used in the first layer and which has a relatively low thermal conductivity, such as a fiber based material, a foam, or a vacuum based material.

A specific embodiment of the present invention relates to a laminate as defined above, wherein the cover material is an insulation material selected from the group consisting of glass wool, rock wool, slag wool, wood wool, and the like.

For example, according to the present invention, the insulating material may be a rock wool having a bulk density in the range of 50 to 200 kg/m³, preferably in the range of 60 to 180 kg/m³ and more preferably in the range of 80 to 150 kg/m³.

Moreover, the expression "stabilizing material" is not specifically restricted and includes such materials which may be used in or as the second layer to provide mechanical stability of the laminate.

A further embodiment of the present invention relates to a laminate as defined above, wherein the cover material is a stabilizing material selected from the group consisting of wood wool slabs, oriented strand boards, concrete, plaster, calcium silicate, fiber boards, vermiculite, perlite, and the like.

According to the present invention, the insulating material and the stabilizing material may independently be present in the second layer, or may both be represented by a single material which has suitable insulating and stabilizing properties.

The choice if an insulating material or a stabilizing material or both is used in or as the cover layer may depend on the site of application of the laminate according to the present invention, For example, if the laminate is to be used in a window or door reveal, the cover layer may comprise an insulation material which further improves the laminate's insulation properties. According to another example, if the laminate is used as a floor covering, the cover layer may be a wood wool slab which allows to step on the laminate without influencing its physical integrity.

In one embodiment of the present invention, the cover layer of the above-defined laminate has a thickness in the range of 18 to 100 mm.

According to the present invention, the thickness of the cover layer may be adjusted in view of the desired application of the laminate as defined above. For example, in case the laminate is used in a window or door reveal, the cover layer may be adjusted to a thickness of 20 to 100 mm for a desired reduction of thermal conductivity. According to another example, in case the laminate of the present invention is used as a floor covering, the cover layer may be adjusted to a thickness of 18 to 30 mm, which might be sufficient to stabilize the laminate while reducing the overall thickness thereof to a minimum.

According to another embodiment of the present invention, the above-defined laminate has a thickness in the range of 30 to 130 mm.

The thickness of the laminate may, however, be adjusted to the desired application of the laminate, or may be limited by the space available for installation. For example, in case the laminate is required to have increased insulating properties, the thickness may be adjusted to 30 to 130 mm. According to another example, in case the laminate is used as a floor covering where only very limited space is available, the thickness of the laminate may be adjusted to 30 to 80 mm.

Another embodiment of the present invention relates to a laminate as defined above, wherein the laminate has a thermal conductivity of 0.020 W/m·K or less.

According to the present invention, the thermal conductivity may be adjusted by the choice and the thickness of the materials being comprised in the at least first and second layers of the laminate. For example, the thermal conductivity may be reduced by increasing the thickness of the first layer comprising an aerogel and/or by increasing the thickness of an insulating material as the second layer.

According to a further embodiment, the layers of the above-defined laminate are bound together by using an adhesive and/or by mechanical bonding such as needling.

The layers of the above-defined laminate may for example be bound together by an adhesive for improved stability and easier handling of the laminate. The term "adhesive" as used herein is not restricted to specific adhesives, but includes any compound which is known in the art to increase the adhesion of two surfaces in contact. According to a specific embodiment of the present invention, the adhesive is selected from the group, consisting of polyester resins, epoxy resins, water glass, and the like.

Herein, the term "mechanical bonding" is not restricted as such and includes any type of mechanically connecting the layer of the laminate together. Examples of such mechanical bonding are sewing, stapling, needling, pressing, and the like.

The laminate according to the present invention may be used in a versatile manner, such as in the insulation of window or door reveals, as a floor cover, in the insulation of walls or vehicles, as an insulation layer beneath heating pipes, and the like.

The figures show:

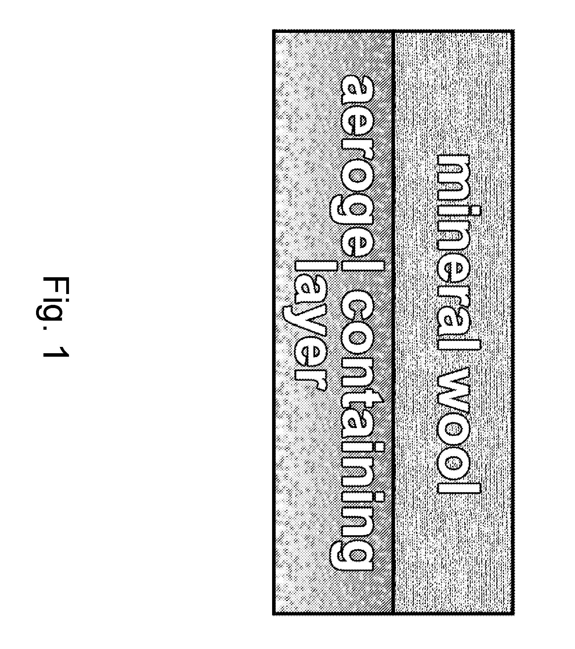

Figure 1 shows a layer structure of one embodiment of the laminate according to the present invention, comprising an aerogel containing polyester fleece as the first layer and a mineral wool layer as the second layer, e.g. usable in window and door reveals.

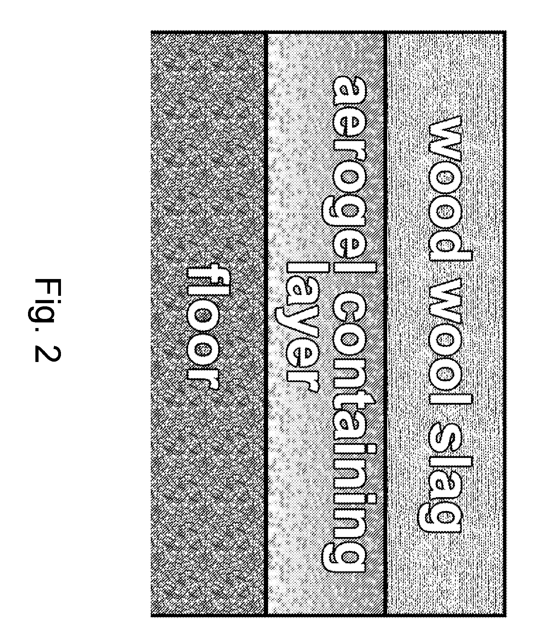

Figure 2 shows a layer structure of one embodiment of the laminate according to the present invention, comprising an aerogel containing polyester fleece as the first layer and a wood wool slab as the second layer which are arranged on a floor base layer, e.g. usable as a floor covering.

The insulation material of the present invention is particularly suited to achieve surprisingly high insulation values while requiring only a fraction of the space as demanded for using resin and fiber based materials. In addition, the insulation material according to the present invention is further advantageously improved in stability and integrity, since the combination of a variety of sheets comprising different materials results in a stable and enduring laminate which can easily be handled and installed in desired locations. Moreover, the laminate of the present invention can advantageously be adjusted in terms of thickness and thermal conductivity as required in a variety of applications, thus representing a surprisingly feasible alternative to commercially available systems.

## Claims

1. A laminate having at least a first and a second layer, wherein the first layer comprises an aerogel, and the second layer comprises a cover material.

2. The laminate according to claim 1, wherein the aerogel has a particle size of 10 nm to 10 mm.

3. The laminate according to claim 1 or 2, wherein the aerogel has a thermal conductivity at 25°C of 0.020 W/m·K or less.

4. The laminate according to any one of claims 1 to 3, wherein the first layer comprises an aerogel containing fabric.

5. The laminate according to claim 4, wherein the aerogel containing fabric has a thermal conductivity of 0.013 W/m·K or less.

6. The laminate according to claim 5, wherein the aerogel containing fabric is an aerogel containing polyester fleece.

7. The laminate according to any one of claims 1 to 6, wherein the first layer has a thickness in the range of 10 to 40 mm.

8. The laminate according to any one of claims 1 to 7, wherein the cover material is an insulating material and/or a stabilizing material.

9. The laminate according to claim 8, wherein the cover material is an insulation material selected from the group consisting of glass wool, rock wool, slag wool, and wood wool.

10. The laminate according to claim 8, wherein the cover material is a stabilizing material selected from the group consisting of wood wool slabs, oriented strand boards, concrete, plaster, calciumsilicate, fiber boards, vermiculite, and perlite.

11. The laminate according to any one of claims 1 to 10, wherein the cover layer has a thickness in the range of 18 to 100 mm.

12. The laminate according to any one of claims 1 to 11, having a thickness in the range of 30 to 130 mm.

13. The laminate according to any one of claims 1 to 12, having a thermal conductivity of 0.020 W/m·K or less.

14. The laminate according to any one of claims 1 to 13, wherein the layers are bound together by using an adhesive and/or by mechanical bonding.

15. Use of a laminate according to any one of claims 1 to 15, for the insulation of window or door reveals, as a floor cover, in the insulation of walls or vehicles, and as an insulation layer beneath heating pipes.
